# EUROPEAN PATENT SPECIFICATION

(11) **EP 0 564 181 B1**
(45) Date of publication and mention of the grant of the patent: **20.11.1996**
(21) Application number: 93302348.3
(22) Date of filing: 26.03.1993
(51) Int. Cl.: F23R 3/10, F23R 3/34, F23R 3/50

(54) **Combustor dome construction**
Konstruktion eines Brennkammerdomes
Construction d'un dôme de chambre de combustion

(30) Priority: 30.03.1992 US 859005
(43) Date of publication of application: 06.10.1993
(73) Proprietor: GENERAL ELECTRIC COMPANY, Schenectady, NY 12345 (US)
(72) Inventor: Probert, George W., Clifton Park, New York 12065 (US)
(74) Representative: Lupton, Frederick

(56) References cited:
- EP-A- 0 488 557
- CH-A- 260 957
- FR-A- 2 384 112
- GB-A- 892 949
- GB-A- 1 539 035
- US-A- 2 801 520
- US-A- 4 292 801

## Description

### TECHNICAL FIELD

This invention relates to gas and liquid fueled turbines, and more specifically, to combustors in industrial gas turbines used in power generation plants.

### BACKGROUND ART

Combustor cap assemblies have evolved over the years from a single fuel nozzle configuration to a multi-nozzle dry low NOx configuration with dual burning zone capability. The cost of combustion hardware has increased proportional to the mechanical complexity associated with the enhanced performance and lower emissions goals of modern combustion systems.

The function of the cap primary nozzle cup assembly is to deliver fuel and air from the fuel nozzle and end cover assembly to the primary zone of the combustor. Air and fuel pass axially through each primary nozzle cup. Air passes through the sidewalls of each primary cup in a radially inward direction, providing cooling for the cup wall. Air also passes through multiple apertures in the cap impingement plate thereby cooling the plate and supplementing the total cap airflow.

The current dry low NOx combustor cap configuration consists of many sheet metal and machined parts in a welded and brazed assembly. The disadvantages of this assembly are:
(1) The cost of manufacturing of multiple parts continues to increase;
(2) Assembly costs are high as many processes are involved; and
(3) Manufacturing cycle time is excessive and precludes production of a volume of assemblies in a limited capacity shop.

### DISCLOSURE OF THE INVENTION

This invention seeks to reduce the cost of dry low NOx combustor cap assemblies within the following constraints:
(1) The cap assembly should continue to function aerodynamically without performance compromise;
(2) The mechanical integrity of the cap should be maintained; and
(3) The cap should physically fit as a replacement part without mechanical or performance impact or required alteration of any other component of the gas turbine combustion system.

According to the invention, there is provided a combustor cap assembly comprising: an outer sleeve; an impingement cooling plate fixed within and to a forward end of the outer sleeve, the impingement cooling plate formed with a plurality of primary fuel nozzle openings arranged in a circular array about a center axis of the assembly, a single centrally located secondary fuel nozzle opening and a plurality of cooling apertures smaller than said primary and secondary nozzle openings and adapted to permit combustion air to flow therethrough and thereby cool said impingement cooling plate; a plurality of open-ended, tubular nozzle cups fixed to the impingement plate in alignment with corresponding ones of said primary fuel nozzle openings; and a plurality of annular nozzle collars fixed to respective rearward ends of said tubular nozzle cups.

In accordance with an exemplary embodiment of the invention, a unique dry low NOx combustor cap assembly is provided which has a significantly reduced number of parts per assembly, for example, 27 parts versus 45 parts for a six nozzle cap assembly. In this exemplary embodiment, the assembly includes a generally cylindrical outer cap sleeve adapted for attachment to a combustor casing in a known manner. The outer sleeve receives within its open forward (or downstream) end, i.e., the end closest to the combustion zone in the combustor, a circular, disk-like impingement plate provided with a forwardly extending outer annular ring which fits snugly into the sleeve and is fixed (for example, by welding) thereto. The impingement plate is also formed with, in the exemplary embodiment, six relatively large primary nozzle openings, arranged in a circular array about the center axis of the assembly, and about a larger secondary nozzle opening in the center of the plate.

Each of the primary nozzle openings is defined by a tapered entry portion, while the secondary nozzle opening is defined by a rearwardly extending annular inner ring. Substantially the entire surface of the impingement plate, with the exception of the inner and outer rings, is formed with a plurality of relatively small cooling apertures.

A primary nozzle cup, provided in the form of an open-ended, tapered tubular component, is fixed to the rearwardly facing free edge of each primary nozzle opening, with the nozzle cup tapering radially inwardly in the rearward direction. The forwardmost axial portion of the cup is also provided with an array of cooling apertures, following an essentially unbroken pattern of cooling apertures with those in the tapered entry portion of the impingement plate.

A radially outwardly extending, annular cup ring is fixed to the rearward edge of each cup, thereby providing a mounting flange for a nozzle collar as described below.

The sleeve-like nozzle collar has a similar radial flange on its forward end which is adapted to butt against the cup ring annular flange, with the collar opening and cup opening in substantial alignment. An annular collar retainer ring, having axial and radial portions, is fixed to the cup ring, with the radial portion overlapping the collar flange to hold the collar against the cup.

The present invention may thus be described in its broader aspects as providing a combustor cap assembly comprising an outer sleeve; an impingement plate fixed to a forward end of the outer sleeve, the impingement plate formed with a plurality of primary fuel nozzle openings and a single secondary fuel nozzle opening; a plurality of open-ended nozzle cups fixed to the impingement plate in alignment with respective primary fuel nozzle openings; and a plurality of nozzle collars fixed to respective rearward ends of the nozzle cups.

The above described construction is of considerably less complex construction and far less costly to manufacture than prior combustor cap assemblies, but without compromising performance. The cap is easily removed from the combustor for repair and/or replacement, and does not require alteration of any other components of the combustion system.

### BRIEF DESCRIPTION OF THE DRAWINGS

The invention will now be described in greater detail, by way of example with reference to the drawings, in which:
FIGURE 1 is a side section of a liner cap assembly in accordance with an exemplary embodiment of the invention;
FIGURE 2 is an enlarged detail of a portion of the sectional view illustrated in Figure 1;
FIGURE 3 is a rear elevation of the assembly illustrated in Figure 1; and
FIGURE 4 is a a partial front elevation of the assembly illustrated in Figure 1.

### BEST MODE FOR CARRYING OUT THE INVENTION

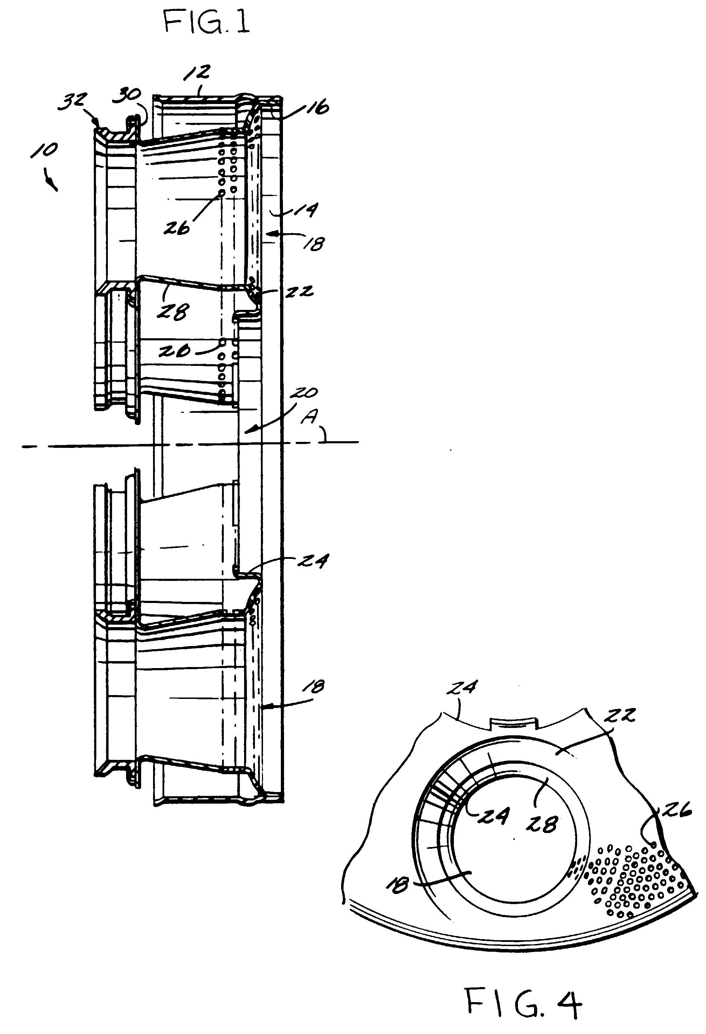

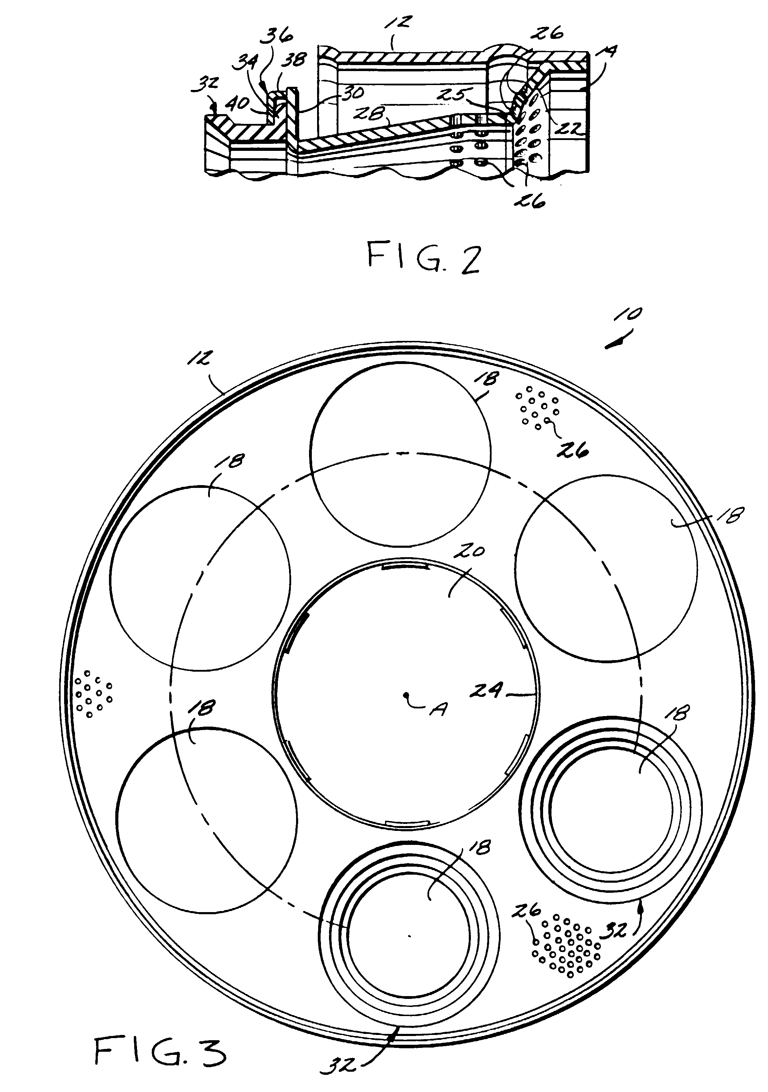

With reference to the drawings, particularly Figures 1 and 2, the combustor cap assembly 10 in accordance with the exemplary embodiment of the invention includes a generally cylindrical, open-ended cap sleeve 12, which is adapted for connection by any suitable means, such as bolts, to the combustor casing assembly (not shown).

The cap sleeve 12 receives within its forward open end an impingement plate 14 which includes a forwardly extending, outer annular ring portion 16, adapted to frictionally engage, and be welded to, the inner surface of sleeve 12. The impingement plate 14 also includes, in the exemplary embodiment, six primary fuel nozzle openings 18, and a single, centrally located secondary fuel nozzle opening 20, best seen in Figure 3. The circular openings 18 are arranged in a circular array about the center axis A and about the circular secondary nozzle opening 20. For each opening or hole 18, there is an inwardly and rearwardly extending inclined or tapered plate portion 22 which defines the openings 18. The impingement plate center hole 20 has an inner annular ring 24 welded thereto, extending rearwardly, or away from the combustion zone. The manner in which the primary nozzles and single secondary nozzle are fitted within the respective openings 18 and 20 forms no part of this invention.

The impingement plate 14, including the tapered portions 22 and all areas between the primary fuel nozzle openings 18 (but excluding the inner and outer annular rings 16 and 24) is formed with an array of cooling apertures 26, extending over substantially the entire surface thereof. Air flowing through the impingement plate 14 serves to cool the plate and to supplement the total cap assembly airflow used in the combustion process.

A primary nozzle cup 28 which, as best seen in Figures 1 and 2, comprises open ended tubular members, with an inwardly tapered surface extending in a rearward direction, welded to the rearwardly facing free edge 25 (Figure 2) of each tapered portion 22 defining the respective openings 18. To the rearwardmost edge of each cup 28, there is fixed (by welding, for example) a radially outwardly extending cup ring or mounting ring flange 30. An annular nozzle collar 32 formed with a radial mounting flange 34 (Figure 2) is butted up against flange 30 and the collar is secured to the cup by means of a collar retainer ring 36 welded in place after the nozzle collar 32 is properly oriented vis-a-vis the cup ring 28. The collar retainer ring 36 has axial and radial portions 38, 40, respectively, such that portion 38 may be welded to the flange 30 and portion 40 extends radially inwardly to overlap the flange 34 of the collar 32, thereby precluding separation of the cup 28 and collar 32.

There may be provided a slight annular gap between the flange 34 and axial portion 38 of the retainer ring 32 in order to provide a degree of self-adjustability of the collar 32 relative to an associated primary nozzle (not shown) to account for any slight misalignment and/or tolerance build-up during assembly of the combustor.

The various components as described above are preferably secured by welding. All components in the exemplary embodiment are preferably made from 0.157 cm (.062 inch) thick Hastalloy-X sheet with the following exceptions. The nozzle collars are machined from 403SS bar stock, and the nozzle collar retainers are 0.1143 cm (.045 inch) thick Hastalloy-X sheet.

The above described exemplary embodiment (for a six nozzle combustor) has 40% fewer parts (27 versus 45 in the currently used cap assembly), with eighteen fewer welds. As a result, cost is significantly reduced, while at the same time, preliminary tests indicate NOx emission levels as low and possibly lower than current cap assemblies.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A combustor cap assembly (10) comprising: an outer sleeve (12);
an impingement cooling plate (14) fixed within and to a forward end of the outer sleeve (12), the impingement cooling plate (14) formed with a plurality of primary fuel nozzle openings (18) arranged in a circular array about a center axis (A) of the assembly, a single centrally located secondary fuel nozzle opening (20) and a plurality of cooling apertures (26) smaller than said primary and secondary nozzle openings (18,20) and adapted to permit combustion air to flow therethrough and thereby cool said impingement cooling plate (14);
a plurality of open-ended, tubular nozzle cups (28) fixed to the impingement plate (14) in alignment with corresponding ones of said primary fuel nozzle openings (18); and a plurality of annular nozzle collars (32) fixed to respective rearward ends of said tubular nozzle cups (28).

2. The combustor cap assembly of claim 1 wherein said impingement cooling plate (14) is provided with a first axially extending outer annular ring (16) about its outer periphery, and a second axially extending inner annular ring (24) extending about said secondary nozzle opening (20).

3. The combustor cap assembly of claim 2 wherein said outer annular ring (16) is telescopically received within said forward end of said sleeve (12).

4. The combustor cap assembly of claim 1 wherein each nozzle cup (28) has a forward portion provided with an array of cooling apertures (26).

5. The combustor cap assembly of claim 1 wherein each nozzle cup (28) is provided with a radial flange (30) at a rearward end thereof, and each of said nozzle collars (32), is provided with a corresponding radial flange (34) in abutting relationship with said cup radial flange (30).

6. The combustor cap assembly of claim 5 wherein in an annular collar retainer (36) is fixed to each cup radial flange (30)in overlapping relationship to said collar radial flange (34) to thereby hold the collar (32) against the cup (28).

7. The combustor cap assembly of claim 6 wherein said annular nozzle collar (32) is movable relative to said cup (28).

## Patentansprüche

1. Brennkammer-Kappenanordnung (10) enthaltend:
eine äußere Hülse (12);
eine Prallkühlplatte (14), die in und an einem vorderen Ende der äußeren Hülse (12) befestigt ist, wobei die Prallkühlplatte (14) mit mehreren primären Brennstoffdüsenöffnungen (18), die in einer Kreisanordnung um eine Mittelachse (A) der Anordnung herum angeordnet sind, einer einzelnen, mittig angeordneten sekundären Brennstoffdüsenöffnung (20) und mehreren Kühlöffnungen (26) versehen ist, die kleiner als die primären und sekundären Düsenöffnungen (18, 20) und in der Lage sind zu gestatten, daß Verbrennungsluft hindurchströmt und dadurch die Prallkühlplatte (14) kühlt;
mehrere am Ende offene, rohrförmige Düsenbecher (28), die an der Prallplatte (14) in Ausrichtung mit entsprechenden primären Brennstoffdüsenöffnungen (18) befestigt sind; und mehrere ringförmige Düsenbuchsen (32), die an entsprechenden hinteren Enden der rohrförmigen Düsenbecher (28) befestigt sind.

2. Brennkammer-Kappenanordnung nach Anspruch 1, wobei die Prallkühlplatte (14) mit einem ersten axial verlaufenden äußeren Kreisring (16) um seinen Außenumfang herum versehen ist, und ein zweiter axial verlaufender innerer Kreisring (24) sich um die sekundäre Düsenöffnung (20) herum erstreckt.

3. Brennkammer-Kappenanordnung nach Anspruch 2, wobei der äußere Kreisring (16) in dem vorderen Ende der Hülse (12) teleskopartig aufgenommen ist.

4. Brennkammer-Kappenanordnung nach Anspruch 1, wobei jeder Düsenbecher (28) einen vorderen Abschnitt hat, der mit einer Anordnung von Kühlöffnungen (26) versehen ist.

5. Brennkammer-Kappenanordnung nach Anspruch 1, wobei jeder Düsenbecher (28) mit einem radialen Flansch (30) an seinem hinteren Ende versehen ist, und jede Düsenbuchse (32) mit einem entsprechenden radialen Flansch (34) versehen ist, der an den radialen Kappenflansch (30) anliegt.

6. Brennkammer-Kappenanordnung nach Anspruch 5, wobei ein ringförmiger Buchsenhalter (36) an jedem radialen Kappenflansch (30) in einer überlappenden Relation zu dem radialen Buchsenflansch (34) befestigt ist, um dadurch die Buchse (32) gegen den Becher (28) zu halten.

7. Brennkammer-Kappenanordnung nach Anspruch 6, wobei die ringförmige Düsenbuchse (32) relativ zu dem Becher (28) bewegbar ist.

## Revendications

1. Ensemble (10) formant tête de chambre de combustion comprenant:
un manchon extérieur (12);
une plaque (14) de refroidissement par impact, fixée dans et à l'extrémité avant du manchon extérieur (12), la plaque (14) de refroidissement par impact comportant une pluralité de trous (18) d'injecteurs de carburant primaires, disposés en une rangée circulaire autour d'un axe central (A) de l'ensemble, un seul trou central (20) d'injecteur de carburant secondaire et une pluralité d'ouvertures de refroidissement (26) plus petites que lesdits trous (18, 20) d'injecteurs primaires et d'injecteur secondaire et adaptées pour permettre à l'air de combustion de s'écouler à travers ces ouvertures et de refroidir ainsi ladite plaque (14) de refroidissement par impact;
une pluralité de cuvettes (28) d'injecteurs, tubulaires et à extrémités ouvertes, fixées à la plaque (14) de refroidissement par impact en alignement avec ceux correspondants desdits trous (18) d'injecteurs de carburant primaires; et une pluralité de douilles annulaires (32) d'injecteurs, fixées aux extrémités arrière respectives desdites cuvettes tubulaires (28) d'injecteurs.

2. Ensemble formant tête de chambre de combustion selon la revendication 1, dans lequel ladite plaque (14) de refroidissement par impact est pourvue, autour de sa périphérie extérieure, d'une première bague annulaire extérieure (16) s'étendant dans le sens axial, et d'une seconde bague annulaire intérieure (24) s'étendant dans le sens axial autour dudit trou (20) d'injecteur secondaire.

3. Ensemble formant tête de chambre de combustion selon la revendication 2, dans lequel ladite bague annulaire extérieure (16) est logée télescopiquement dans ladite extrémité avant dudit manchon (12).

4. Ensemble formant tête de chambre de combustion selon la revendication 1, dans lequel chaque cuvette (28) d'injecteur comporte une partie avant pourvue d'un arrangement d'ouvertures (26) de refroidissement.

5. Ensemble formant tête de chambre de combustion selon la revendication 1, dans lequel chaque cuvette (28) d'injecteur est pourvue d'un rebord radial (30) à son extrémité arrière, et chacune desdites douilles (32) d'injecteurs est pourvue d'un rebord radial correspondant (34) en contact de butée avec ledit rebord radial (30) de cuvette.

6. Ensemble formant tête de chambre de combustion selon la revendication 5, dans lequel un élément (36) de retenue de douille annulaire est fixé à chaque rebord radial (30) de cuvette, dans une disposition de recouvrement vis-à-vis de ce rebord radial (34) de douille afin de maintenir ainsi la douille (32) contre la cuvette (28).

7. Ensemble formant tête de chambre de combustion selon la revendication 6, dans lequel ladite douille annulaire (32) d'injecteur peut être déplacé par rapport à ladite cuvette.
